# FASCICULE DE BREVET EUROPEEN

(11) **EP 1 323 931 B1**
(45) Date de publication et mention de la délivrance du brevet: **30.05.2007**
(21) Numéro de dépôt: 02293144.8
(22) Date de dépôt: 18.12.2002
(51) Int. Cl.: F15B 15/28, G01D 5/48

(54) **Dispositif et procédé de contrôle de la position de la tige d'un vérin**
Vorrichtung und Verfahren zur Lagemessung einer Kolbenstange
Device and method for monitoring the position of a piston rod

(30) Priorité: 21.12.2001 FR 0116655
(43) Date de publication de la demande: 02.07.2003
(73) Titulaire: CENTRE TECHNIQUE DES INDUSTRIES MECANIQUES, F-60300 Senlis (FR)
(72) Inventeur: Walaszek, Henri Christian, 95360 Montmagny (FR)
(74) Mandataire: Bertrand, Didier

(56) Documents cités:
- DE-A- 4 244 204
- US-A- 4 723 976

## Description

La présente invention concerne le contrôle ou la mesure de la position de la tige d'un vérin.

Dans le domaine industriel, il est utile de pouvoir contrôler la position rentrée ou sortie d'une tige de vérin, hydraulique ou autre, de manière précise, notamment en vue d'un asservissement.

Il existe plusieurs techniques possibles, et il a été proposé en particulier d'utiliser les ondes ultrasonores pour connaître la position de la tige d'un vérin.

Le document US 4936143 utilise un traducteur ultrasonore installé dans la paroi de fond d'une des chambres d'un vérin hydraulique et déduit des phénomènes d'écho et de résonance dans la chambre la profondeur de celle-ci et donc la position du piston dans la chambre. Cette technique, bien que séduisante en théorie, se heurte en pratique à des difficultés liées à la complexité du signal retourné et à des perturbations tenant en particulier à la température et à la pression de l'huile. De plus, cette technique se prête mal à une installation dans des vérins existants.

Le document US 6119579, qui divulgue les caractéristiques des préambules des revendications indépendantes 1 et 5, fait connaître un dispositif et un procédé de contrôle utilisant aussi un traducteur ultrasonore disposé sur une paroi latérale d'un corps de vérin, permettant de déduire du signal retourné une caractéristique d'état du vérin, à savoir si le piston est devant le traducteur, ou s'il est d'un côté ou de l'autre du traducteur. En revanche, le système ne permet pas la détermination de la position précise de la position et donc permet pas un asservissement efficace en fonction de la position réelle de la tige de vérin.

On connaît aussi par les documents US 4723976 et DE 4244204 des dispositifs de mesure de la course d'un vérin disposés en bout de vérin pour mesurer l'enfoncement de la tige par rapport à une tête de détection frontale. De tels dispositifs ne peuvent pas s'installer facilement sur des vérins existants.

Le but de l'invention est de proposer un dispositif et un procédé de détermination ultrasonore de la position de la tige d'un vérin ne présentant pas les inconvénients mentionnés.

Ce but est atteint dans le cadre de l'invention grâce à un dispositif du type comprenant un traducteur ultrasonore disposé sur le vérin comprenant un cylindre à l'intérieur duquel coulisse une tige munie d'un piston, pour envoyer des ondes ultrasonores dans une région du vérin et pour recevoir et analyser le signal de retour afin d'en déduire la position de la tige, caractérisé en ce que le traducteur est disposé latéralement au voisinage de ladite tige et à l'extérieur du cylindre pour envoyer obliquement des ondes ultrasonores dans ladite tige dans au moins une partie de sa longueur.

Avantageusement, le traducteur envoie ses ondes obliquement, soit d'un côté soit de l'autre, c'est-à-dire soit du côté de la chambre interne du vérin, soit du côté extérieur.

Le traducteur est avantageusement placé près de la sortie de la tige du cylindre.

Bien qu'on puisse utiliser des ondes de surface donnant une image linéaire de la longueur de tige explorée, il est aussi possible et plus simple d'utiliser des ondes de volume obliques ; la réponse du signal n'est pas nécessairement linéaire mais grâce à un étalonnage préalable, on peut déduire de l'étude du signal de retour la longueur de la tige explorée.

L'analyse du signal de retour se fait très aisément selon les techniques connues utilisées en métrologie pour la mesure d'épaisseur.

L'invention sera mieux comprise et d'autres avantages et caractéristiques seront mis en évidence à la lecture de la description suivante de l'invention. On se référera aux dessins annexés sur lesquels :
- la figure 1 est une vue schématique du dispositif conforme à l'invention installé sur un vérin,
- les figures 2 et 3 sont deux schémas montrant le chemin des ondes dans deux positions de tiges de vérin différentes et les figures 2A et 3A correspondantes montrent la forme du signal redressé obtenu en fonction du temps dans lesdites deux positions ;
- la figure 4 est un graphique montrant la distance de sortie du vérin en fonction du temps de propagation mesuré.

Le vérin 1 à équiper du dispositif de l'invention 2 comporte un cylindre 3 fermé d'un côté par une paroi annulaire frontale 4 que traverse la tige coulissante 5 portant à une extrémité un piston 6 délimitant deux chambres dans le corps cylindrique 3 du vérin 1. Les chambres comportent des entrées et sorties de fluide de commande non représentées, comme il est bien connu en soi.

Le dispositif de l'invention comporte un traducteur 7, de type piézo-électrique, magnétostrictif ou électromagnétique, permettant d'émettre et de recevoir un signal ultrasonore, et connecté à des moyens 8 d'excitation impulsionnelle et de réception-amplification du signal de retour 9 et d'analyse 10, de type connu, comme par exemple des appareils utilisés pour la mesure d'épaisseur par ultrasons.

Le traducteur 7 est disposé près de la tige5, à l'extérieur du corps de vérin, près de la paroi frontale 4. Il est disposé de manière à envoyer les ondes ultrasonores 11 vers l'une ou l'autre des extrémités de la tige 5, ici l'extrémité extérieure de la tige. L'onde ultrasonore 11 se propage et est réfléchie par l'extrémité de la tige. L'écho de retour est marqué sur le signal 9 par le pic 12 qui apparaît au bout d'un temps plus ou moins long t₁ ou t₂ fonction de la longueur de tige 5 sortie 1₁ ou 1₂.

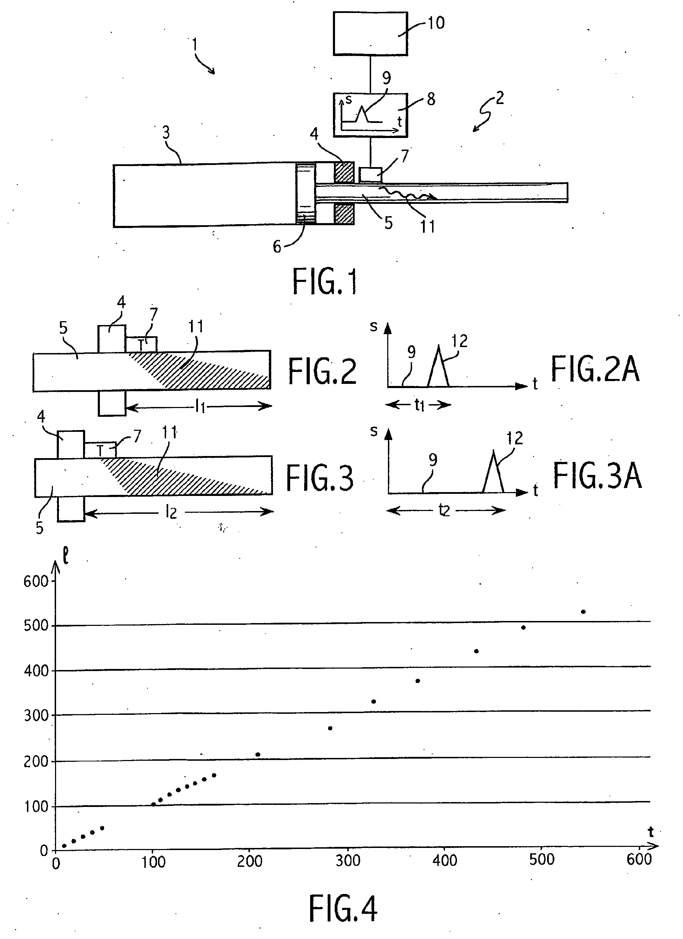

Le graphique de la figure 4 montre la longueur 1 corrélée au temps t mesuré par l'écho 12 du signal 9. Comme on le voit sur ce graphique représentant les résultats d'une expérience, la relation obtenue est ici sensiblement linéaire.

Cependant, il est possible d'observer des non-linéarités qui peuvent être dues par exemple aux réflexions multiples que peut subir l'onde 11 sur les parois de la tige avant de revenir au point d'émission, ces réflexions multiples étant d'autant plus probables que la longueur de tige est grande. Cependant, un étalonnage préalable permet de tracer la courbe longueur/temps et donc de l'exploiter par la suite pour déduire du temps observé pour un écho la longueur de tige sortie.

Les ondes utilisées peuvent être des ondes de surface, des ondes réfractées (rampantes ou "skimming"), des ondes de Rayleigh ou des ondes inclinées comme représenté. Le mode de couplage du traducteur à la tige de vérin peut être à sec, à contact à film d'huile (notamment l'huile du vérin) ou de type électromagnétique, selon la nature du traducteur lui-même.

Une variante du dispositif consiste dans l'émission de trains d'ondes ultrasonores entretenues en lieu et place de l'excitation impulsionnelle. Dans ce cas, le signal de retour est exploité soit dans le domaine temporel, comme dans le dispositif décrit ci-dessus, soit en termes d'interférences d'ondes progressives (déplacement de ventres et noeuds de vibrations) comme sur les lignes de propagation UHF (technique STUB).

## Revendications

1. Dispositif (2) de contrôle de la position de la tige d'un vérin (1) comprenant un cylindre (3) à l'intérieur duquel coulisse une tige (5) munie d'un piston (6), le dispositif étant du type comprenant un traducteur ultrasonore (7) disposé sur le vérin (1) pour envoyer des ondes ultrasonores (11) dans une région du vérin (1) et pour recevoir et analyser le signal de retour (9) afin d'en déduire la position de la tige (5), **caractérise en ce que** le traducteur (7) est dispose latéralement au voisinage de ladite tige (5) et à l'extérieur du cylindre (3) pour envoyer obliquement des ondes ultrasonores (11) dans ladite tige (5) dans au moins une partie de sa longueur (l₁, l₂).

2. Dispositif (2) selon la revendication 1, **caractérisé en ce que** le traducteur (7) envoie ses ondes obliquement dans la tige (5) du côté de la chambre interne du vérin.

3. Dispositif (2) selon la revendication 1, **caractérisé en ce que** le traducteur (7) envoie ses ondes obliquement dans la tige (5) du côté opposé à la chambre interne du vérin.

4. Dispositif (2) selon l'une quelconque des revendications 1 à 3, **caractérisé en ce que** le traducteur (7) est placé près de la sortie de la tige (5) du cylindre (3).

5. Procédé de contrôle de la position de la tige d'un vérin (1) comprenant un cylindre (3) à l'intérieur duquel coulisse une tige (5) munie d'un piston (6), du type selon lequel on envoie des ondes ultrasonores (11) dans une région du vérin (1) et on reçoit et on analyse le signal de retour (9) afin d'en déduire la position de la tige (5), **caractérisé en ce qu'**on envoie obliquement des ondes ultrasonores (11) dans ladite tige (5) dans au moins une partie de sa longueur (l₁, l₂).

## Claims

1. Device (2) for monitoring the position of the rod of a cylinder assembly (1) comprising a cylinder (3) inside which slides a rod (5) provided with a piston (6), the device being of the type comprising an ultrasound transducer (7) disposed on the cylinder assembly (1) in order to transmit ultrasound waves (11) into a region of the cylinder assembly (1) and to receive and analyse the return signal (9) in order to deduce therefrom the position of the rod (5), **characterised in that** the transducer (7) is disposed laterally in the proximity of the said rod (5) and outside the cylinder (3) in order to transmit ultrasound waves (11) obliquely into the said rod (5) over at least part of its length (l₁, l₂).

2. Device (2) as claimed in claim 1, **characterised in that** the transducer (7) transmits its waves obliquely into the rod (5) from the side of the internal chamber of the cylinder assembly.

3. Device (2) as claimed in claim 1, **characterised in that** the transducer (7) transmits its waves obliquely into the rod (5) from the side opposite to the internal chamber of the cylinder assembly.

4. Device (2) as claimed in any one of claims 1 to 3, **characterised in that** the transducer (7) is placed close to the exit of the rod (5) from the cylinder (3).

5. Method for monitoring the position of the rod of a cylinder assembly (1) comprising a cylinder (3) inside which slides a rod (5) provided with a piston (6), of the type in which ultrasound waves (11) are transmitted into a region of the cylinder assembly (1) and the return signal (9) is received and analysed in order to deduce therefrom the position of the rod (5), **characterised in that** ultrasound waves (11) are transmitted obliquely into the said rod (5) over at least part of its length (l₁, l₂).

## Patentansprüche

1. Vorrichtung (2) zum Regeln bzw. Steuern bzw. Überwachen der Position der Stange einer Kolbenvorrichtung bzw. eines Zylinders bzw. einer Winde (1) umfassend einen Zylinder (3) in dessen Inneren eine Stange (5), welche mit einem Kolben (6) versehen ist, gleitet, wobei die Vorrichtung von dem Typ ist, daß sie einen Ultraschall-Wandler (7) umfaßt, der auf bzw. an der Kolbenvorrichtung (1) angeordnet ist, um Ultraschallwellen (11) in einen Bereich der Kolbenvorrichtung (1) zu senden und um das Rückmeldesignal bzw. das zurückkommende Signal (9) zu empfangen und zu analysieren, um daraus die Position der Stange (5) abzuleiten, **dadurch gekennzeichnet, daß** der Wandler (7) seitlich in der Nähe der Stange und außerhalb des Zylinders (3) angeordnet ist, um die Ultraschallwellen (11) schräg in die Stange (5), auf mindestens einem bzw. in mindestens einen Teil ihrer Länge (l₁, l₂), zu senden.

2. Vorrichtung (2) gemäß Anspruch 1, **dadurch gekennzeichnet, daß** der Wandler (7) seine Wellen schräg in die Stange (5) auf die bzw. von der Seite der inneren Kammer der Kolbenvorrichtung sendet.

3. Vorrichtung (2) gemäß Anspruch 1, **dadurch gekennzeichnet, daß** der Wandler (7) seine Wellen schräg in die Stange (5) auf die bzw. von der Seite gegenüber der inneren Kammer der Kolbenvorrichtungsendet.

4. Vorrichtung (2) gemäß einem der Ansprüche 1 bis 3, **dadurch gekennzeichnet, daß** der Wandler (7) in der Nähe des Ausgangs bzw. Austritts der Stange (5) aus dem Zylinders (3) angeordnet ist.

5. Verfahren zum Regeln bzw. Steuern bzw. Überwachen der Position der Stange einer Kolbenvorrichtung bzw. eines Zylinders bzw. einer Winde(1) umfassend einen Zylinder (3) in dessen Inneren eine Stange (5), welche mit einem Kolben (6) versehen ist, gleitet, von dem Typ, daß Ultraschallwellen (11) in einen Bereich der Kolbenvorrichtung (1) gesendet werden und das Rückmeldesignal bzw. das zurückkommende Signal (9) empfangen und analysiert wird, um daraus die Position der Stange (5) abzuleiten, **dadurch gekennzeichnet, daß** Ultraschallwellen (11) schräg in die Stange (5) gesendet werden, auf mindestens einem bzw. in mindestens einen Teil ihrer Länge (l₁, l₂).
